(19) Europäisches Patentamt
European Patent Office
Office européen des brevets

(11) Veröffentlichungsnummer: **0 267 150 B1**

(12) **EUROPÄISCHE PATENTSCHRIFT**

(45) Veröffentlichungstag der Patentschrift: **17.07.91**

(51) Int. Cl.$^5$: **A01N 25/28**

(21) Anmeldenummer: **87810603.8**

(22) Anmeldetag: **19.10.87**

# (54) Bekämpfung von Ektoparasiten.

(30) Priorität: **23.10.86 CH 4221/86**

(43) Veröffentlichungstag der Anmeldung:
**11.05.88 Patentblatt 88/19**

(45) Bekanntmachung des Hinweises auf die Patenterteilung:
**17.07.91 Patentblatt 91/29**

(84) Benannte Vertragsstaaten:
**AT BE CH DE ES FR GB GR IT LI LU NL SE**

(56) Entgegenhaltungen:
**EP-A- 0 134 674**
**DE-C- 2 208 618**

**COMMONWEALTH AGRICULTURAL BUREAU, Zusammenfassung Nr. 84683845, Slough, GB; T.L. FRIDINGER: "Designing the ultimate weapon against fleas", & VETERINARY MEDICINE AND SMALL ANIMAL CLINICIAN, Band 79, Nr. 9, 1984, Seiten 1151-1155**

**COMMONWEALTH AGRICULTURAL BUREAU, Zusammenfassung Nr. 84295485, Slough, GB; R.N. PRICE: "Direct control of flies on animals", & SPAN, Band 27, Nr. 1, Januar 1984, Seiten 30-32**

**CHEMICAL ABSTRACTS, Band 81, Nr. 17, 28. Oktober 1974, Seite 151, Zusammenfassung Nr. 100692t, Columbus, Ohio, US; V.M. BELONOSOV: "Gamma-isomer content in hexachloran-creolin emulsions during sheep dipping", & TR., VSES. NAUCH.-ISSLED. INST. VET. SANIT. 1972, 43, 265-70**

(73) Patentinhaber: **CIBA-GEIGY AG**
**Klybeckstrasse 141**
**CH-4002 Basel(CH)**

(72) Erfinder: **Graf, Jean-François, Dr.**
**Blauenweg 3**
**CH-4102 Binningen(CH)**
Erfinder: **Hässlin, Hans Walter, Dr.**
**Hebelstrasse 9A**
**W-7889 Grenzach-Wyhlen 1(DE)**
Erfinder: **Schuurman, Hessel Johannes, Dr.**
**Hauptstrasse 5**
**CH-4148 Pfeffingen(CH)**
Erfinder: **Steiner, Theodor, Dr.**
**Hinter Gärten 7**
**CH-4125 Riehen(CH)**
Erfinder: **Wieland, Bruno**
**2106 Constance Drive**
**Oakville Ontario L6J 5X6(CA)**

EP 0 267 150 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft das nachstehend im einzelnen charakterisierte Verfahren zur Bekämpfung von Ektoparasiten an Nutztieren, das darauf beruht, dass man das Parasitizid in mikroenkapsulierter Form einsetzt und dadurch das Stripping des Wirkstoffs verhindert.

Viele an sich sehr aktive Pestizide zeigen bei spezifischen Applikationsformen unerwünschte Begleiterscheinungen, die deren Einsatz in der Tierhaltung erheblich beeinträchtigen. Einer dieser besonders gravierenden Nebeneffekte ist das Stripping (Auszugseffekt) von Ektoparasitiziden. Dieses Stripping ist schon lange bekannte, vgl. Australian Veterinary Journal, Vol. 44, August, 1968, Seiten 344 bis 349.

Der Stripping-Effekt ist eine Substanzeigenschaft, die keiner bestimmten Stoffklasse zugeordnet werden kann. Vielmehr zeigen Vertreter chemisch sehr unterschiedlicher Stoffklassen, wie z.B. Organophosphate, Organochlorverbindungen, Carbamate, Amidine und Pyrethroide diesen Effekt. Handelsprodukte mit ausgeprägtem Stripping-Effekt sind z.B. AMITRAZ = N,N-Di-(2,4-xylyliminomethyl)methylamin; BROMPHOS-ETHYL = 0-(4-Brom-2,5-dichlorphenyl)-0,0-diethyl-thiophosphat; DIOXATHION = S,S'-(1,4-Dioxan-2,3-diyl)-0,0,0',0'-tetraethyl-dithiophosphat; PROPETAMPHOS = 1-Methylethyl-(E)-3-[[(ethylamino)-methoxyphosphinothioyl]oxy]-2-butensäureester; CHLORPYRIFOS = Thiophosphorsäure-0,0-diethyl-0-(3,5,6-trichloro-2-pyridinyl)ester; DIAZINON = Thiophosphorsäure-0,0-diethyl-0-[6-methyl-2-(1-methylethyl)-4-pyrimidinyl]ester; COUMAPHOS = Thiophosphorsäure-0-(3-chlor-4-methyl-2-oxo-2H-1-benzopyran-7-yl)-0,0-d ethylester; ETHION = Dithiophosphorsäure-S,S'-methylen-0,0,0',0'-tetraethylester; MALATHION = [-(Dimethoxiphosphinothioyl)thio]bernsteinsäuredietylester; CHLORFENVINPHOS = Phosphorsäure-2-chlor-1(2,4-dichlorphenyl)ethenyl-diethylester; TOXAPHENE = Chloriertes Camphen; LINDANE = 1α,2β,3β,4α,5α,6β-Hexachlorcyclohexan und TIFATOL = N-(2,3-Dihydro-3-methyl-1,3-thiazol-2-yliden)-2,4-xylidin, PHOXIM = 0-(α-Cyanobenzylidenamino)-0',0''-diethylthiophosphat.

Unter Stripping versteht man eine unerwünschte, übermässige Adsorption eines Ektoparasitizides an das Fell oder die Haut eines behandelten Tieres aus eine flüssigen Anwendungsform, die in der Folge zu einer überproportionalen Verringerung der Wirkstoffkonzentration in der überschüssigen Flüssigkeit führt.

Ein quantitatives Mass für den Stripping-Effekt ist der Stripping-Faktor (stripping rate), der sich ergibt aus dem Quotienten gebildet aus real entzogener Menge Aktivsubstanz und theoretisch entzogener Menge Aktivsubstanz, wobei unter real entzogener Menge Aktivsubstanz diejenige Menge zu verstehen ist, die durch das behandelte Tier der Flüssigformulierung entzogen worden ist, und unter theoretisch entzogener Menge Aktivsubstanz diejenige Menge zu verstehen ist, die vor dem Gebrauch der Flüssigformulierung in einem Volumen vorlag, das dem durch das behandelte Tier entzogenen Volumen entspricht. Wird nun ein Tier z.B. durch ein Tauchbad geschleust, so bleibt ein bestimmtes Volumen der Flüssigformulierung im Fell und auf der Haut des Tieres haften. Aendert sich nun die Konzentration im Bad nicht, so resultiert ein Stripping-Faktor von 1. Dies bedeutet, dass der Wirkstoff nicht strippt. Zeigt der Wirkstoff jedoch eine hohe Affinität zum Haar bzw. zur Haut des Tieres, so entzieht das Tier dem Bad mehr Wirkstoff, als dem entsprechenden Flüssigkeitsvolumen entspricht, und der Stripping-Faktor wird dann grösser als 1, d.h. dieser Wirkstoff zeigt einen Stripping-Effekt.

In der Praxis werden Ektoparasitizide im allgemeinen an Nutztiere, vor allem an Herdentiere, wie Rinder, Schafe, Ziegen, Pferde, Esel, Kamele, Schweine, Rentiere, Karibu und Büffel, aber auch an Tiere in kleineren Gruppen, wie Hunde und Kaninchen appliziert. indem man die Tiere in intensiven Kontakt mit einer Flüssigformulierung des Wirkstoffs bringt. Dies geschieht normalerweise dadurch, dass man die Tiere durch Tauchbäder (plunge dips), durch Sprühgänge (spray races), durch Duschen (showers) oder ähnliche Anlagen - im folgenden einfachheitshalber als Bäder bezeichnet - schleust, wobei der Wirkstoff als Lösung oder überwiegend in Form einer Emulsion oder Dispersion eingesetzt wird. Es handelt sich dabei um Anlagen, bei denen aus ökonomischen und ökologischen Gründen bereits gebrauchte Behandlungsflüssigkeit zur Behandlung weiterer Tiere verwendet wird.

Man stellt nun fest, dass sehr viele Ektoparasitizide auf Grund ihrer ausgeprägten Affinität zum Haar oder zur Haut des Tieres in weit höherem Masse am behandelten Tier haften bleiben, als der vom Fell aufgesogenen Flüssigkeitsmenge entspricht.

Werden beispielsweise mehrere Tiere nacheinander durch dasselbe Tauchbad geschleust und zeigt die verwendete Wirksubstanz einen Stripping-Effekt (Auszugs-Effekt), so stellt man einerseits eine rasche Konzentrationsabnahme in der Bad-Flüssigkeit fest, zum andern entziehen die ersten Tiere der Bad-Flüssigkeit weitaus mehr Wirksubstanz als die nachfolgenden, wodurch die letzten Tiere womöglich nicht mehr ausreichend behandelt werden.

Will man nun eine Ueber- und Unterdosierung vermeiden, so muss die fortlaufende Konzentrationsabnahme an Wirksubstanz in der Bad-Flüssigkeit kompensiert werden. Das bedeutet für den Betreiber des Bades, das er ständig mit verschiedenen Verdünnungsraten und Nachfüllmengen konfrontiert ist. Er ist

gezwungen, die tatsächliche Konzentration immer wieder zu messen und genau berechnete Mengen an Wirksubstanz und an Verdünnungsmittel nachzufüllen. Ausserdem wird insgesamt mehr Wirksubstanz verbraucht, als für eine effiziente Behandlung der Nutztiere erforderlich ist, was weder vom ökonomischen noch vom ökologischen Standpunkt aus erwünscht ist.

Die Nachteile des Stripping-Phänomens bestehen also in einer unökonomischen und komplizierten Handhabung der Tierbäder, Sprühgänge, Duschen und anderer entsprechender Anlagen, einer Ueberdosierung und Intoxikation bei den zuerst behandelten Tieren sowie einer Unterdosierung und daraus resultierenden Unwirksamkeit bei den zuletzt behandelten Tieren.

Darüber hinaus bildet das Stripping bei der praktischen Anwendung von Tierbädern eine der Hauptursachen dafür, dass trotz der Bäder kein durchgreifender Erfolg bei der Behandlung gegen Ektoparasiten erzielt wird. Hinzu kommt der bei Unterdosierungen oft beobachtete Nachteil, dass ein Teil der Parasiten überlebt, erneut mit dem Wirkstoff in Kontakt kommt und dadurch die Resistenzbildung gefördert wird, so dass ganze Wirkstoffklassen unter Umständen vorzeitig durch andere ersetzt werden müssen.

Es wurde nun gefunden, dass man überraschenderweise den Stripping-Effekt von Ektoparasitiziden und alle daraus resultierenden Nachteile auf einfache Weise vollständig oder nahezu vollständig eliminieren kann, indem man in den Tierbädern statt einer Wirkstoff-Emulsion oder Wirkstoff-Dispersion das Ektoparasitizid in mikroenkapsulierter Form einsetzt, so dass die vorliegende Erfindung insbesondere die Verwendung mikroenkapsulierter Ektoparasitizide in Tierbädern, bei denen gebrauchte Behandlungsflüssigkeit zur Behandlung weiterer Tiere verwendet wird, betrifft.

Im Rahmen der vorliegenden Erfindung wird die Behandlungsflüssigkeit als gebraucht bezeichnet, wenn sie an einem oder mehreren Tieren zur Anwendung gelangt ist. So gilt beispielsweise die Bad-Flüssigkeit eines Tauchbades in bezug auf nachfolgende Tiere als gebraucht, wenn das erste Tier sich in der Bad-Flüssigkeit befindet, d.h., bei allen nachfolgenden Tieren liegt eine gebrauchte Behandlungsflüssigkeit vor. Entsprechendes gilt für andere Vorrichtungen, bei denen beispielsweise Behandlungsflüssigkeit aufgefangen und wiederverwendet wird.

Die vorliegende Erfindung betrifft daher ein Verfahren zur Bekämpfung von Ektoparasiten an Nutztieren, bei welchem die Nutztiere durch ein Bad geschleust werden, welches mit einer Bad-Flüssigkeit beschickt ist, die ein Ektoparasitizid enthält, und bei welchem gebrauchte Behandlungsflüssigkeit zur Behandlung weiterer Nutztiere verwendet wird, wobei das Verfahren dadurch gekennzeichnet ist, dass man ein Bad verwendet, in welchem eine wässrige Dispersion eines mikroenkapsulierten Ektoparasitizides vorliegt. Der Einsatz von Mikrokapseln mit einem Querschnitt von 1 bis 30 $\mu$, vorzugsweise 1 bis 5 $\mu$, erweist sich hierbei als besonders vorteilhaft.

Das Verfahren lässt sich besonders vorteilhaft anwenden, wenn es sich bei den Bädern um Tauchbäder, Sprühgänge oder Duschen handelt. Vorteilhaft ist ferner ein Verfahren, bei dem die Flüssigformulierung des Wirkstoffs in benetzender Weise auf die Tiere appliziert wird.

Das erfindungsgemässe Verfahren stellt prinzipiell stets dann eine Verbesserung dar, wenn das zu applizierende Ektoparasitizid bei konventioneller Formulierung einen Stripping-Faktor aufweist, der grösser als der Wert 1 ist.

Eine gute parasitizide Wirkung gegen Ektoparasiten, wie beispielsweise Zecken, Milben, Myiasiserreger, Läuse, Schaflausfliegen, Fliegen und Flöhe erreicht man, wenn die Wirkstoffkonzentration im Bad bei 10 bis 1'000 ppm, bevorzugt 50 bis 500 ppm, liegt.

Mikroenkapsuliertes Pyrethrin zur kontrollierten Freisetzung des Wirkstoffs (Slow Release Formulierung) wird von T.L. Fridinger in "Designing the ultimate weapon against fleas" VETERINARY MEDICINE AND SMALL ANIMAL CLINICIAN, Band 79, Nr.9, 1984, S. 1151-1155 beschrieben.

Verfahren zur Mikroenkapsulierung von Aktivsubstanzen unterschiedlicher Wirkungsrichtungen sind dem Fachmann hinlänglich bekannt, so z.B. aus DE-3,417,200; EP-165,227; EP-141,584; US-3,624,248; US-3,492,380; US-4,102,800; US-4,436,719; US-4,497,793; DE-2,910,252; DE-3,207,421; US-4,563,212; DE-2,757,634; US-4,160,838; US-4,285,720; US-4,230,809; US-4,303,548; DE-2,757,528 und EP 214,936 wobei für den erfindungsgemässen Einsatz das Verfahren zur Enkapsulierung unerheblich ist. Wesentlich hingegen sind die Ummantelung des Wirkstoffs, damit dessen Affinität zum Fell oder zur Haut des Tieres nicht mehr zum Tragen kommt, die Grösse der Kapseln und die Wirkstoffkonzentration in der Bad-Flüssigkeit.

Eine bevorzugte Ausführungsform des erfindungsgemässen Verfahrens besteht darin, dass man eine wässrige Dispersion von mikroenkapsulierten Ektoparasitiziden mit einer Kapselwand aus Polyharnstoff einsetzt. Diese Dispersion lässt sich herstellen, indem man in Gegenwart eines anionischen Dispergators sowie eines nichtionischen Schutzkolloids und/oder eines nichtionischen Tensids ein Polyisocyanat und ein in Wasser schwerlösliches Ektoparasitizid in Wasser dispergiert bzw. emulgiert und zu der resultierenden Dispersion bzw. Emulsion ein Polyamin zusetzt. Dieses Herstellungsverfahren wird als bevorzugtes Verfahren zur Herstellung einer wässrigen Dispersion von mikroenkapsulierten Ektoparasitiziden mit einer Kapselwand aus Polyharnstoff nachfolgend näher beschrieben.

Als anionische Dispergatoren kommen allgemein Oligomere und Polymere, sowie Polykondensate in Betracht, die eine ausreichende Anzahl von anionischen Gruppen enthalten, um ihre Wasserlöslichkeit zu gewährleisten. Geeignete anionische Gruppen sind beispielsweise Sulfogruppen oder Carboxylgruppen, wobei Polymere mit Carboxylgruppen nur bei höherem pH-Wert, vorzugsweise bei einem pH-Wert grösser als 5, verwendet werden können. Die Zahl der anionischen Gruppen pro Polymermolekül beträgt in der Regel mindestens 60 % der Anzahl der am Aufbau des Moleküls beteiligten Monomereinheiten. Oligomere und Polymere, die Sulfogruppen enthalten, können entweder durch Polymerisation Sulfogruppen enthaltender Monomerer oder durch Sulfonierung der betreffenden Oligomeren oder Polymeren hergestellt werden. Polymere, die Carboxylgruppen enthalten, können durch Verseifung von Polyacrylaten oder Polymethacrylaten erhalten werden, wobei der Verseifungsgrad mindestens 60 % betragen muss. Insbesondere sind als anionische Dispergatoren sulfonierte Polymere und Kondensationsprodukte von aromatischen Sulfonsäuren mit Formaldehyd geeignet. Typische Beispiele für solche anionischen Dispergatoren sind:

A. Salze der Polystyrolsulfonsäure, insbesondere die Alkalimetall-, Erdalkalimetall- und Ammoniumsalze, sowie die Salze von organischen Aminen, die durch Polymerisation von Styrolsulfonsäure beziehungsweise deren Salzen oder durch Sulfonierung von Polystyrol und anschliessende Neutralisation mit einer entsprechenden Base erhalten werden können, wobei im Falle der Sulfonierung von Polystyrol der Sulfonierungsgrad wenigstens 60 % betragen sollte;

B. Salze der Polyvinylsulfonsäure, insbesondere die Alkalimetall-, Erdalkalimetall- und Ammoniumsalze, sowie die Salze mit organischen Aminen, die durch Polymerisation von Vinylsulfonsäure oder deren Salzen herstellbar sind;

C. Salze von Kondensationsprodukten von Naphthalinsulfonsäuren, insbesondere Naphthalin-2-sulfonsäure, mit Formaldehyd, insbesondere die Alkalimetall-, Erdalkalimetall- und Ammoniumsalze, sowie ihre Salze mit organischen Aminen, die durch Sulfonieren von Naphthalin, Kondensation der gebildeten Naphthalinsulfonsäuren mit Formaldehyd und Neutralisation mit einer entsprechenden Base erhalten werden können. Die Kondensationsprodukte können durch die Formel

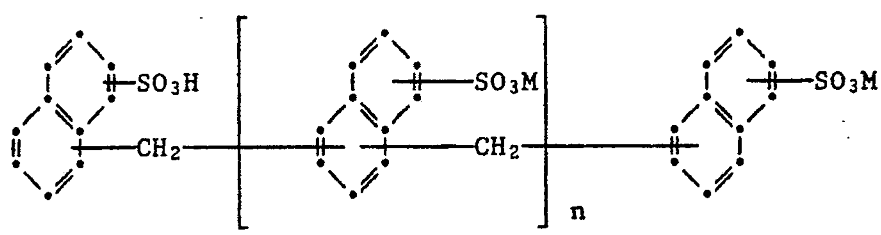

beschrieben werden, in welcher M Natrium, Kalium, Magnesium, Calcium, Ammonium oder das von einem organischen Amin abgeleitete Kation und n 1-25 bedeuten. Das Molekulargewicht dieser Produkte beträgt etwa 500-6000.

D. Salze von Kondensationsprodukten von Naphthalinsulfonsäure mit Phenolsulfonsäure und Formaldehyd, insbesondere die Alkalimetall-, Erdalkalimetall- und Ammoniumsalze, sowie Salze mit organischen Aminen. Diese Produkte stellen Sulfogruppen enthaltende Polymere mit einem mittleren Molekulargewicht von 6'000-8'000 dar, in denen die monomeren Bausteine Naphthalin und Phenol teils über Methylengruppen und teils über Sulfongruppen miteinander verbunden sind. Ihre Struktur ist ungefähr wie folgt:

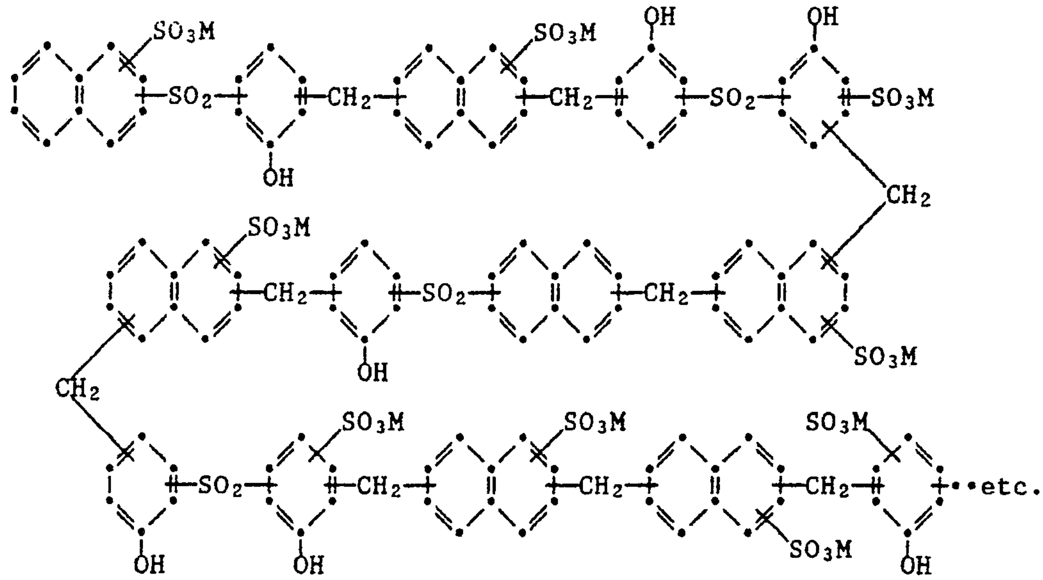

wobei M Natrium, Kalium, Magnesium, Calcium, Ammonium oder das von einem organischen Amin abgeleitete Kation bedeutet.

E. Salze der Ligninsulfonsäure, insbesondere das Natrium-, Kalium-, Magnesium-, Calcium oder Ammoniumsalz.

Bevorzugte anionische Dispergatoren sind Salze von Polystyrolsulfonsäure (Typ A), Salze von Kondensationsprodukten von Naphthalinsulfonsäure mit Formaldehyd (Typ C) und insbesondere Kondensationsprodukte von Naphthalinsulfonsäure mit Phenolsulfonsäure und Formaldehyd (Typ D).

Die als anionische Dispergatoren besonders bevorzugten Kondensationsprodukte von Naphthalinsulfonsäure mit Phenolsulfonsäure und Formaldehyd des oben genannten Typs D sind bisher nicht in der Literatur beschrieben. Sie können hergestellt werden, indem man Naphthalin bei 120-130 °C zunächst mit konzentrierter Schwefelsäure und/oder Oleum in Naphthalinsulfonsäure überführt, dem Reaktionsgemisch anschliessend Phenol zufügt und zuerst bei 120-130 ° weiter umsetzt und dann im Vakuum bei 150-170 °C das Reaktionswasser abtrennt und das Reaktionsprodukt nach Abkühlung auf 90-100 ° mit Formaldehyd kondensiert, danach auf pH 6-7 neutralisiert, zur Trockene eindampft und den Rückstand granuliert. Man erhält so einen wasserlöslichen anionischen Dispergator (nachfolgend "Dispergator A" genannt) in Form eines Granulats mit einem mittleren Molekulargewicht von 6'000-8'000.

Bei der Sulfonierung von Naphthalin unter den vorgenannten Bedingungen wird vorwiegend Naphthalin-2-Sulfonsäure neben geringen Mengen Naphthalindisulfonsäure gebildet. Nach Zugabe des Phenols wird dieses ebenfalls sulfoniert. Dabei werden jedoch, insbesondere beim nachfolgenden Aufheizen auf 150-170 °, neben Phenolsulfonsäure auch in erheblichem Masse Sulfone, wie 4,4'-Dihydroxydiphenylsulfon und 4-Hydroxyphenylnaphthylsulfon, gebildet. Daher entsteht bei der nachfolgenden Kondensation mit Formaldehyd ein Polymeres, dessen monomere Bausteine Naphthalin und Phenol teils über Methylengruppen und teils über Sulfongruppen verknüpft sind. Bei der Herstellung von Dispergator A können Naphthalin, Phenol, Schwefelsäure, Formaldehyd und Base im Molverhältnis 1:(0,5 bis 1):(2 bis 2,5):(0,4 bis 0.8):(2 bis 3) eingesetzt werden. Vorteilhaft beträgt das Molverhältnis von Naphthalin:Phenol:Schwefelsäure:Formaldehyd:Base 1:(0,7):(2):(0,5):(2), wobei als Base vorteilhaft Natriumhydroxid verwendet wird. Die Schwefelsäure besteht vorteilhaft aus Gemischen von konzentrierter Schwefelsäure und Oleum, wobei die Menge von freiem $SO_3$ im Oleum mindestens der Menge Wasser in der konzentrierten Schwefelsäure equivalent ist, sodass beim Vermischen von konzentrierter Schwefelsäure und Oleum mindestens 100 %ige Schwefelsäure entsteht. Formaldehyd wird vorteilhaft als wässrige Lösung, beispielsweise 37%ige wässrige Lösung, eingesetzt. Die Abtrennung des Reaktionswassers durch Destillation erfolgt vorteilhaft bei einem Druck von 10-50 mbar.

Als nichtionische Schutzkolloide kommen allgemein wasserlösliche Polymere in Betracht, deren Molekulargewicht in der Regel 10 000 - 200 000 beträgt. Dabei kann über das Molekulargewicht des jeweils verwendeten wasserlöslichen Polymeren der mittlere Durchmesser der gebildeten Kapseln beeinflusst werden. Die Verwendung von wasserlöslichen Polymeren mit niedrigerem Molekulargewicht hat eine geringere Viskosität des Reaktionsgemisches und damit die Bildung von grösseren Kapseln zur Folge, während die Verwendung von wasserlöslichen Polymeren mit höherem Molekulargewicht eine höhere

Viskosität des Reaktionsgemisches und damit die Bildung von Kapseln mit kleinerem Durchmesser bewirkt. Geeignete wasserlösliche Polymere sind beispielsweise:

Polyvinylalkohol, Polyvinylmethyläther, Polyvinylpyrrolidon, Hydroxyäthylcellulose, Hydroxypropylcellulose, Methylcellulose (Substitutionsgrad: 1,5 bis 2), Hydroxyäthymethylcellulose, Hydroxypropylmethylcellulose, Poly-(2-hydroxyäthyl)-methacrylat, Poly-[2-(2-hydroxyäthoxy)-äthyl]-methacrylat, Polyäthylenoxid (Polyoxyäthylen) und Polyallylalkohol (Polyglycidol).

Ein bevorzugtes nichtionisches Schutzkolloid ist Polyvinylalkohol. Besonders geeignet sind Polyvinylalkohole mit einer Viskosität von 4-60 cp (gemessen an 4 %igen wässrigen Lösungen bei 20 °C), die durch Verseifung von Polyvinylacetat hergestellt wurden, wobei der Verseifungsgrad mindestens 60 %, vorzugsweise jedoch 80-95 % beträgt. Geeignete Produkte dieser Art sind beispielsweise unter der Bezeichnung MOWIOL® im Handel.

Als nichtionische Tenside kommen allgemein nichtionische wasserlösliche Polymere mit einem Molekulargewicht unter 20 000, vorzugsweise unter 5 000, in Betracht. Besonders geeignete nichtionische Tenside dieser Art sind die durch Umsetzung von Aethylenoxid oder durch kombinierte Umsetzung von Aethylenoxid und Propylenoxid mit Fettalkoholen, Alkylphenolen, Fettsäuren, Fettsäureestern von Polyhydroxyverbindungen, Fettsäureamiden und Fettaminen herstellbaren Produkte, wobei die Zahl der Aethylenoxid- und Propylenoxid-Einheiten in weiten Grenzen variiert werden kann. Im allgemeinen liegt die Zahl der Aethylenoxid- bzw. Aethylenoxid-/Propylenoxid-Einheiten bei 1-200, vorzugsweise bei 5-100 und insbesondere bei 8-40. Geeignete nichtionische Tenside sind beispielsweise:

Alkylpolyäthylenglykoläther der Formel

$$R_1-O\left[-CH_2-CH_2-O\right]_{n_1}-H$$

worin $R_1$ $C_8$-$C_{20}$-Alkyl und $n_1$ 2-100 bedeutet. Produkte dieser Art sind im Handel beispielsweise unter den Bezeichnungen BRIJ® (Atlas Chemical), ETHYLAN® CD und ETHYLAN® D (Diamond Shamrock) GENAPOL® C, GENAPOL® O und GENAPOL® S (Hoechst AG) verfügbar;

Alkylphenolpolyäthylenglykoläther der Formel

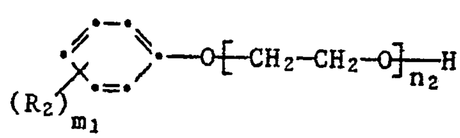

worin $R_2$ $C_8$-$C_{12}$-Alkyl, $m_1$ 1-3 und $n_2$ 2-40 bedeutet. Bevorzugte Bedeutungen von $R_2$ sind Octyl und Nonyl. Produkte dieser Art sind im Handel erhältlich, beispielsweise unter den Bezeichnungen Antarox (GAF), TRITON® X (Röhm und Haas Co.), ATLOX® 4991 (ICI), ARKOPAL® N (American Hoechst) und ETHYLAN® (Lankro Chem. Ltd.);

α-Phenäthylphenolpolyglykoläther der Formel

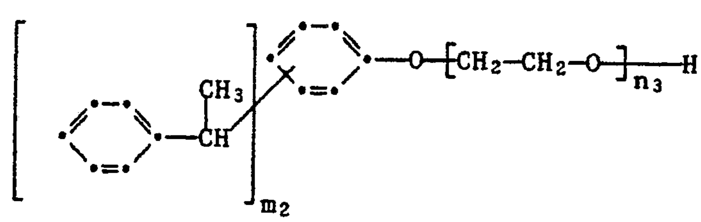

worin $m_2$ 1-3 und $n_3$ 5-40 bedeutet. Diese Produkte werden auch als äthoxylierte Styrylphenole bezeichnet. Im Handel erhältliche Produkte dieser Art sind beispielsweise DISTY® 125 (Geronazzo) und SOPROPHOR® CY 18 (Rhone Poulenc S.A.);

Fettsäure(polyäthoxyäthyl)ester der Formel

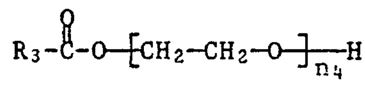

worin $R_3$ $C_8$-$C_{22}$-Alkyl oder $C_{10}$-$C_{22}$-Alkenyl und $n_4$ 2-50 bedeutet. Diese Produkte leiten sich insbesondere von Laurinsäure, Oleinsäure und Stearinsäure ab. Im Handel sind solche Produkte beispielsweise unter der Bezeichnung NONISOL® (Ciba-Geigy) oder MYRJ® (ICI) erhältlich;
Sorbitan-polyäthylenglykoläther-fettsäureester der Formel

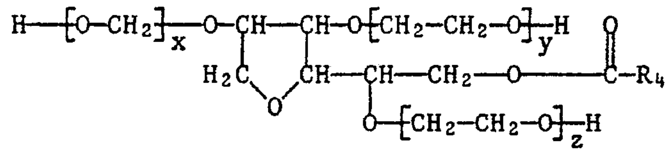

worin $R_4$ $C_8$-$C_{20}$-Alkyl und x, y und z je 1-50 bedeuten, wobei die Summe $x+y+z$ 20-150 beträgt. Als Säurereste $R_4$ kommen insbesondere die Reste der Laurinsäure, Stearinsäure, Palmitinsäure und Oleinsäure in Betracht. Solche Produkte werden auch als Polyscrbate bezeichnet und sind im Handel beispielsweise unter der Bezeichnung TWEEN® (ICI) erhältlich;
Triglycerid-polyäthylenglykoläther der Formel

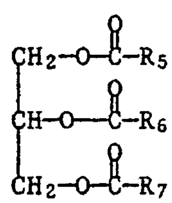

in welcher $R_5$, $R_6$ und $R_7$ den Rest der Formel

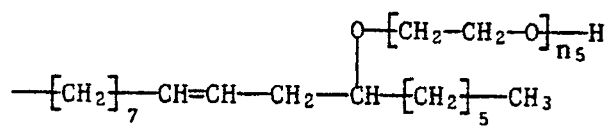

und $R_5$ und $R_6$ unabhängig voneinander auch $C_8$-$C_{20}$-Alkyl oder $C_8$-$C_{20}$-Alkenyl bedeuten, wobei $n_5$ für 3-100 steht. Als Säurereste $R_5CO$-und $R_6CO$- mit $C_8$-$C_{20}$-Alkyl- und $C_8$-$C_{20}$-Alkenylgruppen kommen insbesondere die Reste der Laurinsäure, Palmitinsäure, Stearinsäure und Oleinsäure in Betracht. Ein bevorzugter Vertreter dieses Tensid-Typs ist äthoxyliertes Rizinusöl. Solche Produkte sind im Handel unter der Bezeichnung EMULSOGEN® (Hoechst AG) erhältlich;
Fettsäure-polyäthoxyäthylamide der Formel

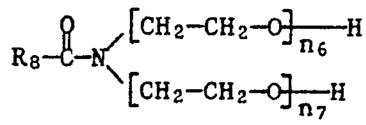

worin $R_8$ $C_8$-$C_{20}$-Alkyl, $C_8$-$C_{20}$-Alkenyl und $n_6$ und $n_7$ jeweils 1-25 bedeutet. Als Säurereste $R_8CO$- kommen insbesondere die Reste der Laurinsäure, Oleinsäure, Palmitinsäure und Stearinsäure in Betracht. Produkte dieser Art sind beispielsweise unter den Bezeichnungen AMIDOX® (Stepan Chemical Co.), ETHOMID® (Armak Co.) im Handel;
N-Polyäthoxyäthylamine der Formel

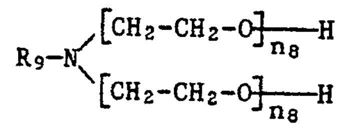

wobei $R_9$ $C_8$-$C_{18}$-Alkyl oder $C_8$-$C_{18}$-Alkenyl bedeutet und $n_8$ jeweils 1-15 bedeutet. Besonders geeignet sind die von Fettaminen, wie Cocosfettamin, Oleylamin, Stearylamin und Talgfettamin abgeleiteten Produkte. Solche Produkte sind beispielsweise unter der Bezeichnung GENAMIN® (Hoechst) im Handel; N,N,N' ,N'-Tetra(polyäthoxypolyproxyäthyl)-äthylendiamine der Formel

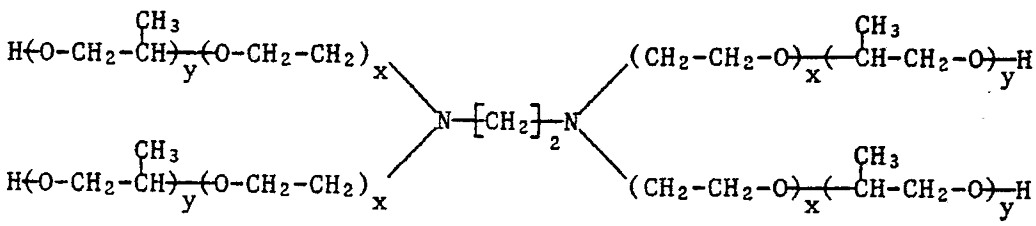

worin x und y je 2-50 und die Summe x+y jeweils 4-100 beträgt. Produkte dieser Art sind im Handel erhältlich, insbesondere unter den Bezeichnungen TERRONIL® und TETRONIC® (BASF Wyandotte Corp.); Alkyl-polyäthylenglykol/polypropylenglykoläther der Formel

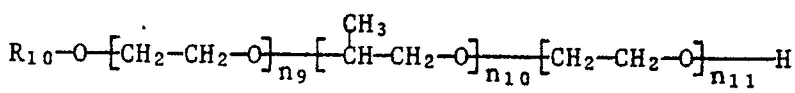

worin $R_{10}$ Wasserstoff, $C_8$-$C_{20}$-Alkyl oder $C_8$-$C_{20}$-Alkenyl und $n_9$ und $n_{11}$ je 2-200 und $n_{10}$ 10-80 bedeutet und die Summe $n_9 + n_{10} + n_{11}$ 15-450 beträgt. Besonders geeignete Produkte dieser Art sind beispielsweise die unter der Bezeichnung PLURONIC® (BASF Wyandotte Corp.) im Handel erhältlichen Polyäthylenoxid-Polypropylenoxid-Blockpolymerisate ($R_{10} = H$).

Bevorzugte nichtionische Tenside sind Aethylenoxid-Propylenoxid-Blockpolymerisate (PLURONICS®), N,N,N' ,N'-Tetra(polyäthoxypolypropoxyäthyl)-äthylendiamine (TETRONICS®), Nonylphenolpolyglykoläther mit 10-20-Aethylenoxideinheiten, Alkylpolyäthylenglykoläther, die sich von Fettalkoholen ableiten (GENAPOL®) und N-Polyäthoxyäthylamine, die sich von Fettaminen ableiten (GENAMIN®). Besonders bevorzugte nichtionische Tenside sind Aethylenoxid-Propylenoxid-Blockpolymersate (PLURONICS®).

Unter Polyisocyanaten sind im Rahmen vorliegender Anmeldung allgemein solche Verbindungen zu verstehen, die zwei oder mehr Isocyanatgruppen im Molekül enthalten. Bevorzugt sind Di- und Triisocyanate, wobei die Isocyanatgruppen an einen aliphatischen oder einen aromatischen Grundkörper gebunden sein können. Beispiele für geeignete aliphatische Diisocyanate sind Tetramethylendiisocyanat, Pentamethylendiisocyanat und Hexamethylendiisocyanat. Geeignete aromatische Isocyanate sind Toluylendiisocyanat (TDI; Mischung aus 2,4- und 2,6-Isomeren), Diphenylmethan-4,4'-diisocyanat (MDI; DESMODUR® VL (Bayer)), Polymethylenpolyphenylisocyanat (MONDUR® MR (Mobay Chemical Company)); PAPI®, PAPI® 135 (Upjohn Co), 2,4,4'-Diphenyläthertriisocyanat, 3,3'-Dimethyl-4,4'-diphenyldiisocyanat, 3,3'-Dimethoxy-4,4'-diphenyldiisocyanat, 1,5-Naphthylendiisocyanat und 4,4',4''-Triphenylmethantriisocyanat. Ein weiteres geeignetes Diisocyanat ist Isophorondiisocyanat. Ferner sind auch Additionsprodukte von Diisocyanaten an mehrwertige Alkohole, wie Aethylenglykol, Glycerin und Trimethylolpropan geeignet, wobei pro Mol mehrwertiger Alkohol jeweils eine der Zahl der Hydroxygruppen des jeweiligen Alkohols entsprechende Zahl von Molen Diisocyanat addiert werden. Auf diese Weise werden mehrere Moleküle Diisocyanat über Urethangruppen an den mehrwertigen Alkohol unter Bildung von höhermolekularen Polyisocyanaten gebunden. Ein besonders geeignetes Produkt dieser Art ist durch Umsetzung von 3 Mol Toluylendiisocyanat mit einem Mo, 2-Aethylglycerin (1,1-bis-Methylolpropanol) herstellbar (DESMODUR® L). Weitere geeignete Produkte werden durch Addition von Hexamethylendiisocyanat oder Isophorondiisocyanat an Aethylenglykol oder Glycerin erhalten. Bevorzugte Polyisocyanate sind Diphenylmethan-4,4'-diisocyanat und Polymethylenpolyphenylisocyanat.

Die vorgenannten Di- und Triisocyanate können jeweils einzeln oder als Mischungen von zwei und

mehreren dieser Isocyanate verwendet werden.

Als Polyamine sind im Rahmen vorliegender Erfindung allgemein solche Verbindungen zu verstehen, die zwei oder mehr Aminogruppen im Molekül enthalten, wobei diese Aminogruppen an aliphatische und aromatische Grundkörper gebunden sein können. Geeignete aliphatische Polyamine sind beispielsweise $\alpha,\omega$-Diamine der Formel

$$H_2N-[CH_2]_n-NH_2$$

in welcher n eine ganze Zahl von 2-6 bedeutet. Als Beispiele für solche Diamine seien Aethylendiamin, Propylen-1,3-diamin, Tetramethylendiamin, Pentamethylendiamin und Hexamethylendiamin genannt. Ein bevorzugtes Diamin ist Hexamethylendiamin.

Weitere geeignete aliphatische Polyamine sind Polyäthylenimine der Formel

$$H_2N-[CH_2-CH_2-NH]_n-H$$

worin n eine ganze Zahl von 2-5 bedeutet. Als Beispiele für solche Polyäthylenimine seien Diäthylentriamin, Triäthylentetramin, Tetraäthylenpentamin, Pentaäthylenhexamin genannt.

Weitere geeignete aliphatische Polyamine sind Dioxaalkan-$\alpha,\omega$-diamine, wie das 4,9-Dioxadodecan-1,12-diamin der Formel

$$H_2N-[CH_2-]_3-O-[CH_2]_4-O-[CH_2]_3-NH_2 \quad .$$

Geeignete aromatische Polyamine sind beispielsweise 1,3-Phenylendiamin, 2,4-Toluylendiamin, 4,4'-Diaminodiphenylmethan, 1,5-Diaminonaphthalin, 1,3,5-Triaminobenzol, 2,4,6-Triaminotoluol, 1,3,6-Triaminonaphthalin, 2,4,4'-Triaminodiphenyläther, 3,4,5-Triamino-1,2,4-triazol und 1,4,5,8-Tetraaminoanthrachinon. Diejenigen der vorgenannten Polyamine, die nicht oder nicht genügend wasserlöslich sind, können als Hydrochloride eingesetzt werden.

Weiterhin sind Polyamine geeignet, die neben den Aminogruppen Sulfogruppen oder Carboxylgruppen enthalten. Beispiele für solche Polyamine sind 1,4,-Phenylendiaminsulfonsäure, 4,4'-Diaminodiphenyl-2-sulfonsäure, oder Diaminomonocarbonsäuren,wie Ornithin und Lysin.

Die vorgenannten Polyamine können einzeln oder als Mischungen von zwei oder mehr Polyaminen eingesetzt werden.

Als Ektopestizide, die nach dem bevorzugten Verfahren formuliert werden können, kommen allgemein solche in Betracht, die

- in Wasser unlöslich, aber gegen Wasser stabil sind,
- bei Raumtemperatur flüssig sind oder einen Schmelzpunkt von $\leqq 60°C$ haben oder solche, die in einem mit Wasser nicht mischbaren organischen Lösungsmittel löslich sind,
- gegen Isocyanate inert sind und
- ein Lösungsvermögen für Polyisocyanate der vorgenannten Art besitzen.

Als mit Wasser nicht mischbare Lösungsmittel, in denen die Ektopestizide gelöst sein können, kommen aliphatische und aromatische Kohlenwasserstoffe, wie Hexan, Cyclohexan, Benzol, Toluol, Xylol, Mineralöl oder Kerosin in Betracht. Weiterhin geeignet sind Cyclohexanon, sowie halogenierte Kohlenwasserstoffe, wie Methylenchlorid, Chloroform, Kohlenstofftetrachlorid, Chlorbenzol und o-Dichlorbenzol. Weiterhin sind Gemische von ein- und mehrfach alkylierten Aromaten geeignet, wie sie beispielsweise unter der Bezeichnung (SHELLSOL®) im Handel sind.

Das bevorzugte Herstellungsverfahren eignet sich prinzipiell für alle Ektoparasitizide, unabhängig von ihrer chemischen Struktur, die in wässrigen Formulierungen einen Stripping-Effekt zeigen.

Beispiele derartiger Wirkstoffgruppen wurden eingangs beschrieben.

Die Mikrokapseln können einen oder mehrere Wirkstoffe enthalten.

Das als bevorzugt klassifizierte Verfahren zur Herstellung von Mikrokapseln wird vorteilhaft in der Weise durchgeführt, dass man zunächst den anionischen Dispergator und das nichtionische Schutzkolloid und/oder das nichtionische Tensid in Wasser löst und anschliessend eine Lösung eines oder mehrerer

Polyisocyanate der vorgenannten Art in einer oder mehreren der vorgenannten pestiziden Wirksubstanzen oder in einer Lösung einer oder mehrerer dieser Wirksubstanzen in einem mit Wasser nicht mischbaren Lösungsmittel zugibt und bis zur Entstehung einer homogenen Dispersion intensiv rührt. Dann fügt man unter weiterem Rühren ein oder mehrere Polyamine der oben genannten Art zu und rührt die Mischung bis zur vollständigen Umsetzung des Polyamins mit dem Isocyanat weiter. Die Polyamine werden vorteilhaft als wässrige Lösung zugesetzt.

Das Enkapsulierungsverfahren kann bei Raumtemperatur oder mässig erhöhter Temperatur durchgeführt werden. Geeignete Temperaturen liegen im Bereich von 10-75 °C. Vorzugsweise wird das erfindungsgemässe Verfahren im Temperaturbereich von 20-45 °C durchgeführt.

Die Reaktionszeiten des Polyisocyanats mit dem Polyamin betragen in der Regel 2 - 30 Minuten. Der jeweilige Grad der Umsetzung und das Ende der Reaktion können durch Titration des in der wässrigen Phase vorliegenden freien Amins festgestellt werden.

Die zur Bildung der Kapselwand benötigten Komponenten können im allgemeinen in einer Menge von 2,5 bis 30 Gew.-%, vorzugsweise 5 bis 20 Gew.-%, bezogen auf das einzukapselnde Material eingesetzt werden, wobei das einzukapselnde Material aus einer Wirksubstanz oder einem Gemisch von zwei oder mehreren Wirksubstanzen oder aus einer Lösung einer Wirksubstanz oder einer Mischung von zwei oder mehreren Wirksubstanzen in einem mit Wasser nicht-mischbaren Lösungsmittel bestehen kann. Die im Einzelfall verwendete Menge der zur Bildung der Kapselwand benötigten Komponenten hängt in erster Linie von der Wanddicke der herzustellenden Kapseln und ferner auch von der Kapselgrösse ab.

Nach dem bevorzugten Herstellungsverfahren können wässerige Suspensionen von Mikrokapseln hergestellt werden, die pro Liter 100-700 g Mikrokapseln enthalten. Vorzugsweise enthalten die nach diesem Verfahren herstellbaren Suspensionen 400-600 g Mikrokapseln pro Liter.

Die nach dem bevorzugten Herstellungsverfahren herstellbaren Suspensionen von Mikrokapseln sind unmittelbar gebrauchsfertig. Sie können jedoch für Transport und Lagerung durch weitere Zusätze, wie oberflächenaktive Mittel, Verdicker, Antischaumittel und Frostschutzmittel, stabilisiert werden.

Es ist jedoch auch möglich, die Mikrokapseln durch Filtrieren oder Zentrifugieren der unmittelbar erhaltenen Suspension abzutrennen und entweder zu trocknen oder erneut in eine Suspension überzuführen. Die aus der Suspension abgetrennten und getrockneten Mikrokapseln stellen ein rieselfähiges Pulver dar, das praktisch unbeschränkt lagerfähig ist.

Durch die gleichzeitige Verwendung eines anionischen Dispergators und eines nichtionischen Schutzkolloids und/oder nichtionischen Tensids beim bevorzugten Herstellungsverfahren wird bereits beim Dispergieren der Lösung des Polyisocyanats im pestiziden Wirkstoff die insbesondere bei der alleinigen Verwendung eines anionischen Dispergators, wie Ligninsulfonat, auftretende starke Viskositätserhöhung vermieden. Dadurch wird nicht nur die Durchführung des Verfahrens erleichtert, sondern es wird gleichzeitig eine schnellere und vollständigere Umsetzung von Polyisocyanat und Polyamin erreicht, wodurch die Bildung unerwünschter Nebenprodukte weitgehend unterbunden wird. Durch die Verringerung der Viskosität des Reaktionsgemisches resultiert ferner bei gleicher Scherkraft eine feinere Dispersion und damit eine Verkleinerung des Durchmessers der hergestellten Kapseln. Die so hergestellten Kapselsuspensionen sind stabil und zeigen auch bei längerer Lagerung keine Sedimentbildung. Die herstellbaren Suspensionen von Mikrokapseln zeigen ferner bei geeigneter Wahl von Art und Menge der anionischen und nichtionischen Dispergatoren thixotrope Eigenschaften und lassen sich daher durch Aufschütteln oder durch Rühren auf einfache Weise in einen leicht fliessfähigen Zustand bringen.

In den nachfolgenden Beispielen, die das bevorzugte Verfahren näher erläutern, stehen die verwendeten Handelsnamen und andere nicht selbstverständliche Bezeichnungen für folgende Produkte:

Anionische Dispergatoren

Dispergator A: Natriumsalz eines Kondensationsprodukts von Naphthalinsulfonsäure mit Phenolsulfonsäure und Formaldehyd hergestellt nach Beispiel 1.

TAMOL® SN: Natriumsalz eines Kondensationsprodukts von Naphthalinsulfonsäure und Formaldehyd, Hersteller: Rohm and Haas Co.

Nichtionische Dispergatoren (Schutzkolloide)

MOWIOL® 18-88: Polyvinylalkohol mit einer Viskosität von 18 cp (gemessen in 4%iger wässriger Lösung bei 20 °C), hergestellt durch Verseifung von Polyvinylacetat (Verseifungsgrad: 88 %), Hersteller: Hoechst AG.

MOWIOL® 40-88: Polyvinylalkohol mit einer Viskosität von 40 cp (gemessen in 4%iger wässriger

Lösung bei 20 °C), hergestellt durch Verseifung von Polyvinylacetat (Verseifungsgrad: 88 %), Hersteller: Hoechst AG.

Nichtionische Tenside

| | |
|---|---|
| PLURONIC® F-108: | Aethylenoxid-Propylenoxid-Blockpolymerisat der Formel $(EO)_x(PO)_y(EO)_z$ mit einem Molekulargewicht von etwa 16000 und einem Aethylenoxidanteil von 80 %, Hersteller: BASF Wyandotte Corp. |
| PLURONIC® P-85: | Aethylenoxid-Propylenoxid-Polymerisat der Formel $(EO)_x(PO)_y(EO)_z$ mit einem Molekulargewicht von 4500 und einem Aethylenoxidanteil von 50 %, Hersteller: BASF Wyandotte Corp. |
| PLURONIC® L-42: | Aethylenoxid-Propylenoxid-Blockpolymerisat der Formel $(EO)_x(PO)_y(EO)_z$ mit einem Molekulargewicht von 1450 und einem Aethylenoxidanteil von 20 %, Hersteller: BASF Wyandotte Corp. |
| TETRONIC® 707: | äthoxyliertes/propoxyliertes Aethylendiamin mit einem Molekulargewicht von 12000 und einem Aethylenoxidanteil von 70 %, Hersteller: BASF Wyandotte Corp. |
| ANTAROX® CO 710: | Nonylphenolpolyglykoläther mit 10 Aethylenoxid-Einheiten, Hersteller: GAF. |
| GENAPOL® C-200: | äthoxylierter Kokosfettalkohol mit 25 Aethylenoxid-Einheiten, Hersteller: Hoechst AG. |
| GENAMIN® T100: | äthoxyliertes Talgfettamin mit 10 Aethylenoxid-Einheiten, Hersteller: Hoechst AG. |

Lösungsmittel

| | |
|---|---|
| SHELLSOL® AB: | Gemisch ein- und mehrfach alkylierter aromatischer Kohlenwasserstoffe, Hersteller: Shell. |

Beispiel 1: Herstellung von Dispergator A

Ausgangsmaterialien:
288 g (2,25 Mol) Naphthalin
144 g (1,53 Mol) Phenol
440 g (4,48 Mol) 100%ige Schwefelsäure
78,5 g (0,97 Mol) 37%ige wässrige Formaldehydlösung
370 g (4,4 Mol) 48%ige wässrige Natronlauge

Das Naphthalin wird in einem Rührgefäss geschmolzen und nach Zugabe der Schwefelsäure 4 Stunden auf 120-125 °C erhitzt. Dann wird das Phenol zugegeben und die Temperatur eine weitere Stunde auf 120-125 °C gehalten. Anschliessend wird das Reaktionsgefäss auf einen Druck von 15 mbar evakuiert, die Temperatur langsam auf 160 °C gesteigert und 3 Stunden dort gehalten, wobei Reaktionswasser durch Destillation abgetrennt wird. Danach wird das Reaktionsgemisch auf 105-110 °C abgekühlt und durch Rühren homogenisiert. Dann wird durch vorsichtige Zugabe von 200 g Eis auf 90 °C abgekühlt, wobei die Homogenität des Gemisches durch ständiges Rühren aufrecht erhalten wird. Danach wird während einer Stunde die Formaldehydlösung bei 90-95 °C zugegeben und 3 Stunden bei 95 °C nachgerührt. Eine Probe des Reaktionsgemisches bildet nun mit Wasser eine klare 5%ige Lösung und riecht nicht mehr nach Formaldehyd. Nun wird das Reaktionsgemisch durch Zugabe von je 60 g Eis und 60 g Wasser auf 80 °C abgekühlt. Nach Zugabe von weiteren 180 ml Wasser wird mit etwa 230-250 ml 48%iger Natronlauge bei einer Temperatur von 80 °C neutralisiert. Dann ist der pH-Wert einer 10%igen Lösung einer Probe des Reaktiongemisches etwa 6,5. Das Reaktionsgemisch wird nun im Vakuum zur Trockene eingedampft und granuliert. Auf diese Weise werden 900 g Dispergator A in Form eines wasserlöslichen Granulats erhalten.

Herstellung von Mikrokapselsuspensionen

Beispiel 2:

In einem 2-Liter Becherglas wird eine Lösung von 87 g Diphenylmethan-4,4'-diisocyanat in 1080 g Diazinon unter Verwendung eines Schnellrührers in einer Lösung von 9,0 g Dispergator A und 9,0 g MOWIOL® 18-88 (in Form einer 10%igen wässrigen Lösung) in 392 g Wasser dispergiert. Nach etwa einer Minute werden 38 g Hexamethylendiamin (in Form einer 40%igen wässrigen Lösung) zugegeben, wobei die

Temperatur um 5-8 °C ansteigt. Es wird eine Stunde nachgerührt und die entstandene Kapselsuspension durch Zugabe einer Lösung von 29 g GENAMIN® T 100 in 80 g Wasser stabilisiert. Man erhält eine stabile Kapselsuspension mit einer Viskosität von 700-1200 cp und einer mittleren Teilchengrösse von 2-5 µm.

Der Verhältnis von Dispergator zu MOWIOL® 18-88 kann bei praktisch gleichbleibender Qualität der gebildeten Suspension von Mikrokapseln im Bereich von 3:1 bis 1:3 variiert werden.

Beispiel 3:

Eine Lösung von 18 g Diphenylmethan-4'4-diisocyanat in 96 g Chlorofenvinphos wird unter intensivem Rühren bei Raumtemperatur in einer Lösung von 1,6 g Dispergator A und 1,6 g PLURONIC® F 108 in 50,5 g Wasser dispergiert. Danach werden 7,4 g Hexamethylendiamin (in Form einer 40%igen wässrigen Lösung) zugesetzt, wobei die Temperatur um 20-30 °C steigt. Die Mischung wird bis zur Abkühlung auf Raumtemperatur nachgerührt. Man erhält eine stabile dünnflüssige Suspension von Mikrokapseln (Viskosität = 150 cp) mit einer mittleren Teilchengrösse von 2-3 µm, einem Wirkstoffgehalt von 51,5 Gew.-% und einem Kapselwandanteil von 13,6 Gew.-%.

Beispiel 4:

Eine Lösung von 87 g Diphenylmethan-4,4'-diisocyanat in 1080 g Diazinon wird unter intensivem Rühren bei Raumtemperatur in einer Lösung von 9,0 g Dispergator A, 3,0 g MOWIOL® 18-88 (in Form einer 10%igen wässrigen Lösung) und 6,0 g PLURONIC F 108 in 446 g Wasser dispergiert. Danach werden 37,9 g Hexamethylendiamin (in Form einer 40%igen wässrigen Lösung) zugesetzt, wobei die Temperatur um 3-5 °C ansteigt. Die erhaltene flüssige Suspension von Mikrokapseln mit einer mittleren Kapselgrösse von 1,5-2,5 µm hat eine Viskosität vo n 250-600 cp. Sie enthält 61,6 Gew.-% Wirksubstanz und 7,1 Gew.-% Kapselwandanteil.

Wirksamkeitstests

Beispiel 5: Ermittlung des Stripping-Faktors von DIAZINON, CHLORFENVINPHOS und TIFATOL auf Schafswolle

a) Diese Labortests werden mit je 8-12 g ungereinigter Wolle des identischen Schafs durchgeführt. Hierzu werden Bäder verwendet, die Diazinon in gleicher Konzentration enthalten, aber mit verschiedenen Formulierungen hergestellt werden. In jedes der Bäder wird je einer der Wollballen bis zu seiner vollständigen Durchnässung eingetaucht und anschliessend auf Drahtnetz gelegt, so das überschüssige Flüssigformulierung in das jeweilige Bad zurücktropfen kann. Danach wird die von der Wolle aufgenommene Flüssigkeitsmenge und die Wirkstoff-Konzentration der im Bad verbleibenden Flüssigformulierung gemessen. Die Versuche werden mit gleichen Wirkstoffkonzentrationen mit jeweils neuen Wollproben wiederholt. Der Stripping-Faktor SF wird gemäss der eingangs beschriebenen Definition bestimmt. Die Ergebnisse sind nachfolgend angeführt.

a) Resultate für DIAZINON:

| Klassische Formulierung | Mikroenkapsulierter Wirkstoff |
| --- | --- |
| 60 % DIAZINON<br>3 % Vaselinöl<br>3 % Epichlorhydrin<br>1 % Cumaronharz<br>33 % Triton X-100<br><br>in Form einer wässrigen Emulsion | DIAZINON wird gemäss Beispiel 2 mikroenkapsuliert und die resultierende wässrige Dispersion entsprechend mit Wasser verdünnt. |
| Reduktion der Wirkstoff-konzentration im Bad:<br>19 bis 32 % | Reduktion der Wirkstoff-konzentration im Bad<br><3 % |
| Stripping-Faktor<br>4,2 bis 8,5 | Stripping-Faktor<br>1,0 |

b) Analoge Untersuchungen mit CHLORFENVINPHOS führen zu folgenden Resultaten:

| | |
| --- | --- |
| Stripping-Faktor<br>3,4 bis 24,8 | Stripping-Faktor<br>2 |

c) Analoge Untersuchungen mit Tifatol führen zu folgenden Resultaten:

| | |
| --- | --- |
| Stripping-Faktor<br>3,8 | Stripping-Faktor<br>1,5 |

Beispiel 6: Ermittlung des Stripping-Faktors von DIAZINON am Schaf

3 Gruppen mit je 5 Schafen werden durch ein Bad geschleust, das die in Beispiel 5 genannte wässrige, klassische DIAZINON-Formulierung enthält. Aus der Abnahme des Volumens an Bad-Flüssigkeit und aus den Wirkstoff-Konzentrationen vor und nach der Benutzung des Bades wird, wie eingangs beschrieben, der Stripping-Faktor bestimmt. Dieser liegt bei der klassischen Formulierung zwischen 7,9 und 9,4. Anschliessend werden 3 Gruppen mit je 5 Schafen durch ein Bad geschleust, das die identische Anfangskonzentration an Aktivsubstanz wie bei der klassischen Formulierung enthält, jedoch nunmehr gemäss Beispiel 3 in mikroenkapsulierter Form. Der Stripping-Faktor liegt beim mikroenkapsulierten DIAZINON nunmehr bei 1,0 bis 1,5.

Diese Ergebnisse werden durch einen Feldtest in Grossbritannien unter Praxisbedingungen voll bestätigt.

Beispiel 7: Ermittlung des Stripping-Faktors von Diazinon am Schaf

111 einjährige Schaflämmer der Beulah-Speckled-Face-Rasse mit einem Gewicht von ungefähr 30 kg pro Tier und vollständigem Vlies werden durch eine Tauchbadanlage geschleust, die mit 1 407 l eines Tauchbades beschickt ist, welches eine mikroenkapsulierte Diazinonformulierung gemäss Beispiel 2 enthält, wobei die Konzentration an Diazinon 250 ppm (mg/L) beträgt. Die Verweildauer in Bad beträgt pro Schaf mindestens 1 Minute. Die Abnahme an Bad-Flüssigkeit in der Anlage wird durch Zugabe weiterer Bad-Flüssigkeit ausgeglichen, wobei die zugesetzte Bad-Flüssigkeit dieselbe Zusammensetzung aufweist wie die ursprüngliche Bad-Flüssigkeit vor dem Einbringen der Schafe (die zugesetzte Bad-Flüssigkeit enthält

also ebenfalls 250 ppm Diazinon). Während der Durchschleusung der Tiere werden dem Tauchbad periodisch Proben entnommen, welche ergeben, dass die Diazinon-Konzentration im Bad in einem Bereich von 227 bis 250 ppm liegt, also im wesentlichen konstant bleibt. Ferner ergeben Messungen der Abtropfflüssigkeit einzelner Schafe, dass hier die Diazinon-Konzentration im Bereich von 243 bis 247 ppm liegt. Auch hier zeigt die geringe Schwankungsbreite der Diazinon-Werte, dass mit mikroenkapsuliertem Diazinon praktisch kein Stripping-Effekt auftritt.

Der Vorteil bei der Verwendung von mikroenkapsulierten Ektoparasitiziden in Tierbädern, bei denen bereits gebrauchte Behandlungsflüssigkeit zur Behandlung weiterer Tiere verwendet wird, liegt somit klar auf der Hand: Da es für den Betreiber des Bades lediglich erforderlich ist, zur Wiederherstellung des ursprünglichen Volumens an Badflüssigkeit weitere Badflüssigkeit mit einer der Anfangskonzentration entsprechenden Wirkstoffmenge zuzufügen, kann also die laufende Ermittlung und ständige Neuanpassung der Wirkstoffkonzentration während des Durchschleusens der Tiere unterbleiben, wodurch der Arbeitsablauf wesentlich vereinfacht wird und das Risiko falscher Dosierungen nebst den als Folge davon auftretenden Schäden an den unsachgemäss behandelten Tieren wesentlich herabgesetzt wird.

Beispiel 8: Wirkung von mikroenkapsuliertem Diazinon gegen Lucilia cuprina und Lucilia sericata

32 Schafe, deren Wolle eine Länge 3 bis 5 cm aufweist, werden mit der Flüssigformulierung von mikroenkapsuliertem Diazinon gemäss Beispiel 2 behandelt, wobei die Konzentration an Diazinon 250 ppm (mg/L) beträgt. Die Flüssigformulierung wird mit einer Spritzpistole auf den Rücken der Schafe in einer Menge von 3 bis 4 l pro Schaf appliziert.

14 Tage nach der Behandlung werden am Rücken der Schafe Implantate mit Eigelegen von Lucilia cuprina (Diazinon-resistent) und von Lucilia sericata angebracht, wobei 16 Schafe mit L. cuprina und 16 Schafe mit L. sericata implantiert werden. Als Kontrolle dienen Schafe, welche in derselben Weise implantiert werden, jedoch keine Diazinon-Behandlung erhalten haben. Die Implantierung wird bei allen Schafen in wöchentlichen Abständen wiederholt. Jeweils 24 und 48 Stunden nach einer Implantierung wird geprüft, ob lebende Lucilia-Larven vorhanden sind. Die Prüfung ergibt, dass bei den Kontrollschafen eine Larvenentwicklung stattfindet, während die mit Diazinon behandelten Schafe über einen langen Zeitraum larvenfrei bleiben. So hält bei den mit Lucilia cuprina implantierten Schafen die Schutzwirkung des Diazinons 7 bis 8 Wochen lang an, bei den mit Lucilia sericata implantierten Schafen mindestens 12 Wochen.

Beispiel 9: Wirkung von mikroenkapsuliertem Diazinon gegen Psoroptes ovis

4 ungeschorene Schafe mit einem Gewicht von je etwa 30 kg werden mit Psoroptes ovis infestiert, indem man an zwei ca. 20 cm auseinanderliegenden Stellen auf dem Rücken der Schafe je einen Wollbausch mit 15 bis 20n Räudemilben der Spezies Psoroptes ovis im Vlies der Schafe anbringt. 4 bis 5 Wochen nach der Infestation werden die Schafe geschoren und die Grösse der geschädigten Hautfläche wird gemessen. Dann werden die befallenen Schafe mit einer Flüssigformulierung von mikroenkapsuliertem Diazinon gemäss Beispiel 2 behandelt, wobei 2 Schafe mit einer 250 ppm und 2 Schafe mit einer 125 ppm (mg/L) Diazinon enthaltenden Flüssigformulierung behandelt werden. Die Behandlung erfolgt durch topikale Applikation der Flüssigformulierung mit einem Tuschepinsel auf die geschädigten Hautstellen und den näheren Umkreis. Die behandelten Bereiche werden in wöchentlichen Abständen auf ihren Zustand überprüft. Die Behandlung der geschädigten Tiere mit mikroenkapsuliertem Diazinon führt zu einer vollständigen Ausheilung der Schäden in einem Zeitraum von 37 Tagen.

Beispiel 10: Wirkung von mikroenkapsuliertem Diazinon gegen Damalinia ovis

Merinoschafe unterschiedlichen Alters, welche von Damalinia ovis befallen sind, werden geschoren und mit einer Flüssigformulierung von mikroenkapsuliertem Diazinon gemäss Beispiel 2 besprüht, wobei die Applikation gleichzeitig von oben und unten erfolgt. Je 5 Schafe werden mit einer der folgenden Diazinonkonzentrationen besprüht: 25 ppm, 110 ppm und 240 ppm (mg/L). Eine Woche nach der Behandlung wird bei einer Konzentration von 25 ppm Diazinon eine Abtötungsrate der Läuse von 99 % und bei den anderen Konzentrationen eine vollständige Abtötung der Läuse erzielt. In allen Fällen bleibt die Diazinon-Wirkung noch 7 Wochen lang voll erhalten.

## Patentansprüche

1. Verwendung von mikroenkapsulierten Ektoparasitiziden in Tierbädern, bei welchen gebrauchte Behandlungsflüssigkeit in der Bad-Flüssigkeit verbleibt oder dieser wieder zugeführt wird.

2. Verwendung von mikroenkapsulierten Ektoparasitiziden nach Anspruch 1 zur Reduzierung oder Verhinderung eines Stripping-Effektes in Bädern von Rindern, Schafen, Ziegen, Pferden, Eseln, Kamelen, Schweinen, Rentieren, Karibus, Büffeln, Hunden und Kaninchen.

3. Verwendung nach einem der Ansprüche 1 oder 2, dadurch gekennzeichnet, dass es sich bei dem Bad um ein Tauchbad, einen Sprühgang oder eine Dusche handelt.

4. Verwendung nach einem der Ansprüche 1 oder 2, dadurch gekennzeichnet, dass die Mikrokapseln einen Querschnitt von 1 bis 30 $\mu$ aufweisen.

5. Verwendung nach Anspruch 4, dadurch gekennzeichnet, dass die Mikrokapseln einen Querschnitt von 1 bis 5 $\mu$ aufweisen.

6. Verwendung nach einem der Ansprüche 1 oder 2, dadurch gekennzeichnet, dass die Bad-Flüssigkeit den Wirkstoff in einer Konzentration von 10 bis 1'000 ppm enthält.

7. Verwendung nach Anspruch 6, dadurch gekennzeichnet, dass die Bad-Flüssigkeit den Wirkstoff in einer Konzentration von 50 bis 500 ppm enthält.

8. Verwendung nach einem der Ansprüche 1 oder 2, dadurch gekennzeichnet, dass man eine wässrige Dispersion eines mikroenkapsulierten Ektoparasitizides mit einer Kapselwand aus Polyharnstoff einsetzt.

9. Verwendung nach Anspruch 8, dadurch gekennzeichnet, dass man als wässrige Dispersion eines mikroenkapsulierten Ektoparasitizides mit einer Kapselwand aus Polyharnstoff eine solche einsetzt, welche hergestellt worden ist durch Dispergieren oder Emulgieren eines Polyisocyanats und eines in Wasser schwerlöslichen Ektoparasitizids in Wasser in Gegenwart eines anionischen Dispergators und mindestens eines nichtionischen Schutzkolloids und/oder eines nichtionischen Tensids und Zugeben eines Polyamins zu der resultierenden Dispersion oder Emulsion.

10. Verwendung nach einem der Ansprüche 1 oder 2, dadurch gekennzeichet, dass man als Ektoparasitizid einen Wirkstoff ausgewählt aus den Substanzklassen der Organophosphate, Organochlorverbindungen, Carbamate, Amidine und Pyrethroide einsetzt.

11. Verwendung nach Anspruch 10, dadurch gekennzeichnet, dass es sich bei dem ausgewählten Wirkstoff um AMITRAZ = N,N-Di-(2,4-xylyliminomethyl)methylamin; BROMPHOS-ETHYL = 0-(4-Brom-2,5-dichlorphenyl)-0,0-diethylthiophosphat; DIOXATHION = S,S'-(1,4-Dioxan-2,3-diyl)-0,0,0',0'-tetraethyl-dithiophosphat; PROPETAMPHOS = 1-Methylethyl-(E)-3-[[(ethylamino)methoxyphosphinothioyl]oxy]-2-butensäureester; CHLORPYRIFOS = Thiophosphorsäure-0,0-diethyl-0-(3,5,6-trichloro-2-pyridinyl)ester; DIAZINON = Thiophosphorsäure-0,0-diethyl-0-[6-methyl-2-(1-methylethyl)-4-pyrimidinyl]ester; COUMAPHOS = Thiophosphorsäure-0-(3-chlor-4-methyl-2-oxo-2H-1-benzopyran-7-yl)-0,0-diethylester; ETHION = Dithiophosphorsäure-S,S'-methylen-0,0,0',0'tetraethylester; MALATHION = [-(Dimethoxiphosphinothioyl)thio]bernsteinsäuredietylester; CHLORFENVINPHOS = Phosphorsäure-2-chlor-1(2,4-dichlorphenyl)ethenyl-diethylester; TOXAPHENE = Chloriertes Camphen; LINDANE = $1\alpha,2\beta,3\beta,4\alpha,5\alpha,6\beta$-Hexachlorcyclohexan; TIFATOL = N-(2,3-Dihydro-3-methyl-1,3-thiazol-2-yliden)-2,4-xylidin, oder PHOXIM = 0-($\alpha$-Cyanobenzylidenamino)-0',0''-diethylthiophosphat handelt.

12. Verwendung nach Anspruch 11, dadurch gekennzeichnet, dass man als Ektoparasitizid DIAZINON einsetzt.

## Claims

1. The use of microencapsulated ectoparasiticides in animal dips in which used treatment liquid remains in the dip liquid or is fed back thereto.

2. The use of microencapsulated ectoparasiticides according to claim 1 for reducing or preventing a stripping effect in dips for cattle, sheep, goats, horses, donkeys, camels, pigs, reindeer, caribou,

buffalo, dogs and rabbits.

3. The use according to either claim 1 or claim 2, characterised in that the dip is a plunge dip, a spray race or a shower.

4. The use according to either claim 1 or claim 2, characterised in that the microcapsules have a cross-section of from 1 to 30 μ.

5. The use according to claim 4, characterised in that the microcapsules have a cross-section of from 1 to 5 μ.

6. The use according to either claim 1 or claim 2, characterised in that the dip liquid contains the active ingredient in a concentration of from 10 to 1000 ppm.

7. The use according to claim 6, characterised in that the dip liquid contains the active ingredient in a concentration of from 50 to 500 ppm.

8. The use according to either claim 1 or claim 2, characterised in that an aqueous dispersion of a microencapsulated ectoparasiticide having a capsule wall of polyurea is used.

9. The use according to claim 8, characterised in that as the aqueous dispersion of a microencapsulated ectoparasiticide having a capsule wall of polyurea there is used one that has been prepared by dispersing or emulsifying in water a polyisocyanate and an ectoparasiticide that is sparingly soluble in water, in the presence of an anionic dispersion agent and at least one non-ionic protective colloid and/or a non-ionic surfactant, and adding a polyamine to the resulting dispersion or emulsion.

10. The use according to either claim 1 or claim 2, characterised in that there is used as the ectoparasiticide an active ingredient selected from the classes of substances comprising organophosphates, organochlorine compounds, carbamates, amidines and pyrethroids.

11. The use according to claim 10, characterised in that the selected active ingredient is AMITRAZ = N,N-di-(2,4-xylyliminomethyl)-methylamine; BROMPHOS-ETHYL = 0-(4-bromo-2,5-dichlorophenyl)-0,0-diethyl thiophosphate; DIOXATHION = S,S'-(1,4-dioxane-2,3-diyl)-0,0,0',0'-tetraethyl dithiophosphate; PROPETAMPHOS = 1-methylethyl-(E)-3-[[(ethylamino)-methoxyphosphinothioyl]oxy]-2-butenoic acid ester; CHLORPYRIFOS = thiophosphoric acid 0,0-diethyl-0-(3,5,6-trichloro-2-pyridinyl) ester; DIAZINON = thiophosphoric acid 0,0-diethyl-0-[6-methyl-2-(1-methylethyl)-4-pyrimidinyl] ester; COUMAPHOS = thiophosphoric acid 0-(3-chloro-4-methyl-2-oxo-2H-1-benzopyran-7-yl)-0,0-diethyl ester; ETHION = dithiophosphoric acid S,S'-methylene-0,0,0',0'-tetraethyl ester; MALATHION = [-(dimethoxyphosphinothioyl)-thio]-succinic acid diethyl ester; CHLORFENVINPHOS = phosphoric acid 2-chloro-1-(2,4-dichlorophenyl)ethenyldiethyl ester; TOXAPHENE = chlorinated camphene; LINDANE = 1α,2β,3β,4α,5α,6β-hexachlorocyclohexane; TIFATOL = N-(2,3-dihydro-3-methyl-1,3-thiazol-2-ylidene)-2,4-xylidine, or PHOXIM = 0-(α-cyanobenzylideneamino)-0',0"-diethyl thiophosphate.

12. The use according to claim 11, characterised in that DIAZINON is used as the ectoparasiticide.

**Revendications**

1. Utilisation d'ectoparasiticides micro-encapsulés dans des bains pour animaux dans lesquels le liquide de traitement déjà utilisé reste dans le liquide du bain ou est renvoyé dans le liquide du bain.

2. Utilisation d'ectoparasiticides micro-encapsulés selon la revendication 1, pour amoindrir ou éviter un effet d'extraction dans des bains pour bovins, ovins, caprins, chevaux, ânes, chameaux, porcs, rennes, caribous, buffles, chiens et lapins.

3. Utilisation selon l'une des revendications 1 ou 2, caractérisée en ce que le bain est utilisé en immersion, en pulvérisation ou en douche.

4. Utilisation selon l'une des revendications 1 ou 2, caractérisée en ce que les microcapsules ont une

section de 1 à 30 µm.

5. Utilisation selon la revendication 4, caractérisée en ce que les microcapsules ont une section de 1 à 5 µm.

6. Utilisation selon l'une des revendications 1 ou 2, caractérisée en ce que le liquide du bain contient la substance active à une concentration de 10 à 1000 ppm.

7. Utilisation selon la revendication 6, caractérisée en ce que le liquide du bain, contient la substance active à une concentration de 50 à 500 ppm.

8. Utilisation selon l'une des revendications 1 ou 2, caractérisée en ce que l'on utilise une dispersion aqueuse d'un ectoparasiticide micro-encapsulé dont la paroi de capsule consiste en polyurée.

9. Utilisation selon la revendication 8, caractérisée en ce que l'on utilise en tant que dispersion aqueuse d'un ectoparasiticide micro-encapsulé à paroi de capsule consistant en polyurée une telle dispersion qui a été préparée par dispersion ou émulsion dans l'eau d'un polyisocyanate et d'un ectoparasiticide peu soluble dans l'eau en présence d'un agent dispersant anionique et d'au moins un colloïde protecteur non-ionique et/ou d'un agent tensioactif non-ionique, et addition à ladite dispersion ou émulsion d'une polyamine.

10. Utilisation selon l'une des revendications 1 ou 2, caractérisée en ce que l'on utilise en tant qu'ectoparasiticide une substance active choisie dans les classes de substances des organophosphates, des composés organochlorés, des carbamates, des amidines et des pyréthroïdes.

11. Utilisation selon la revendication 10, caractérisée en ce que la substance active choisie est l'AMITRAZ = N,N-di-(2,4-xylyliminométhyl)-méthylamine ; le BROMPHOS-ETHYL = thiophosphate d'0-(4-bromo-2,5-dichlorophényle) et d'0,0-diéthyle ; le DIOXATHION = dithiophosphate de S,S'-(1,4-dioxanne-2,3-diyle) et d'0,0,0',0'-tétraéthyle ; le PROPETAMPHOS = (E)-3-[[(éthylamino)-méthoxyphosphinothioyl]-oxy]-2-buténoate de 1-méthyléthyle ; le CHLORPYRIPHOS = thiophosphate d'0,0-diéthyle et d'0-(3,5,6-trichloro-2-pyridinyle) ; le DIAZINON = thiophosphate d'0,0-diéthyle et d'0-[6-méthyl-2-(1-méthyléthyl)-4-pyrimidinyle] ; le COUMAPHOS = thiophosphate d'0-(3-chloro-4-méthyl-2-oxo-2H-1-benzopyranne-7-yle) et d'0,0-diéthyle ; l'ETHION = dithiophosphate de S,S'-méthylène et d'0,0,0',0'-tétraéthyle ; le MALATHION = [(diméthoxyphosphinothioyl)-thio]-succinate de diéthyle ; le CHLORFENVINPHOS = phosphate de 2-chloro-1-(2,4-dichlorophényl)-éthényl-diéthyle ; le TOXAPHENE = camphène chloré ; le LINDANE = alpha,2 bêta,3 bêta,4 alpha,5 alpha,6 bêta-hexachlorocyclohexane et le TIFATOL = N-(2,3-dihydro-3-méthyl-1,3-thiazole-2-ylidène)-2,4-xylidine et le PHOXIM = thiophosphate d'0-(alpha-cyanobenzylidène-amino)- et d'0',0"-diéthyle.

12. Utilisation selon la revendication 11, caractérisée en ce que l'on utilise en tant qu'ectoparasiticide le DIAZINON.